# EUROPEAN PATENT APPLICATION

(11) **EP 2 735 957 A1**
(43) Date of publication of application: **28.05.2014**
(21) Application number: 13182362.7
(22) Date of filing: 30.08.2013
(51) Int. Cl.: G06F 3/0488, G06F 3/042

(54) **Display apparatus and method of controlling the same**

(30) Priority: 23.11.2012 KR 20120133526
(71) Applicant: Samsung Electronics Co., Ltd, Gyeonggi-do 443-742 (KR)
(72) Inventor: Kim, Yong-ku, Seoul (KR)
(74) Representative: Walaski, Jan Filip

(57) **Abstract**

A display apparatus and a method of controlling the same include a signal receiver which receives a video signal, a signal processor which processes the video signal, a display unit which displays an image based on the video signal, a motion detector which detects a user's motion input with regard to the display unit, and a controller which controls a writing operation to be implemented on the display unit with regard to a user's first motion input forming a predetermined trajectory on a screen of the display unit and controls a preset function to be implemented corresponding to the writing operation with regard to a user's second motion input that gets closer to or farther from the screen of the display unit.

## Description

The present invention relates to a display apparatus and a method of controlling the same, and more particularly to a display apparatus, which uses an optical imaging method to detect touch input, and a method of controlling the same.

As a method of detecting touch input in an electronic board or similar display apparatus, there are an optical imaging method, a resistive method, a capacitive method, a surface acoustic wave method, a piezo-resistive method, etc.

Among them, the display apparatus using the optical imaging method is based on rectilinear propagation of light, which detects touch input in accordance with data of blocked light if light emitted from a light emitter meets an obstacle and is not received in a light receiver.

A conventional display apparatus using the optical imaging method has been capable of only determining presence of input.

Additional aspects and/or advantages of one or more embodiments will be set forth in part in the description which follows and, in part, will be apparent from the description, or may be learned by practice of one or more embodiments of disclosure. One or more embodiments are inclusive of such additional aspects.

One or more embodiments may provide a display apparatus, which may enable a proactive operation in response to touch input, and a method of controlling the same.

Also, one or more embodiments may provide a display apparatus, which may express pressure or perspective corresponding to touch input, and a method of controlling the same.

Also, one or more embodiments may provide a display apparatus and a method of controlling the same, in which two or more operations may be simplified into one operation.

Also, one or more embodiments may provide a display apparatus and a method of controlling the same, in which two users may input touches at a time.

According to one or more embodiments, a display apparatus may include: a signal receiver which may receive a video signal; a signal processor which may process the video signal; a display unit which may display an image based on the video signal; a motion detector which may detect a user's motion input with regard to the display unit; and a controller which may control a writing operation to be implemented on the display unit with regard to a user's first motion input forming a predetermined trajectory on a screen of the display unit and may control a preset function to be implemented corresponding to the writing operation with regard to a user's second motion input that gets closer to or farther from the screen of the display unit.

The motion detector may include a first sensor and a second sensor.

The first sensor and the second sensor may be stacked in a direction perpendicular to the screen of the display unit.

The user's second motion input may be determined based on difference in detection time between the first sensor and the second sensor.

The user's second motion input may be reflected as pressure or speed in the image displayed on the display unit.

The user's second motion input may be determined based on detection order between the first sensor and the second sensor.

The user's second motion input may be reflected as perspective or distance in the image displayed on the display unit.

The user's second motion input may include simultaneous inputs of two users.

The user's second motion input may correspond to two input operations.

A gap between the detection of the first sensor and the detection of the second sensor may be less than a predetermined value.

According to one or more embodiments, a method of controlling a display apparatus including a signal receiver which may receive a video signal, a signal processor which may process the video signal, and a display unit which may display an image based on the video signal may include: detecting a user's motion input with regard to the display unit; and controlling a writing operation to be implemented on the display unit with regard to a user's first motion input forming a predetermined trajectory on a screen of the display unit and controlling a preset function to be implemented corresponding to the writing operation with regard to a user's second motion input that gets closer to or farther from the screen of the display unit.

The detecting a user's motion input with regard to the display unit may include using a first sensor and a second sensor to detect the user's motion input.

The first sensor and the second sensor may be stacked in a direction perpendicular to the screen of the display unit.

The user's second motion input may be determined based on difference in detection time between the first sensor and the second sensor.

The user's second motion input may be reflected as pressure or speed in the image displayed on the display unit.

The user's second motion input may be determined based on detection order between the first sensor and the second sensor.

The user's second motion input may be reflected as perspective or distance in the image displayed on the display unit.

The user's second motion input may include simultaneous inputs of two users.

The user's second motion input may correspond to two input operations.
A gap between the detection of the first sensor and the detection of the second sensor may be less than a predetermined value.

These and/or other aspects will become apparent and more readily appreciated from the following description of exemplary embodiments, taken in conjunction with the accompanying drawings, in which:
FIG. 1 is a schematic view showing a display apparatus which uses an optical imaging method to detect touch input according to one or more embodiments;
FIG. 2 is a schematic view showing a display apparatus which uses an optical imaging method to detect touch input according to one or more embodiments;
FIG. 3 is a block diagram of a display apparatus according to one or more embodiments;
FIG. 4 is a schematic view showing an input detecting operation of a first sensor in a display apparatus according to one or more embodiments;
FIG. 5 is a schematic view showing an input detecting operation of a second sensor in a display apparatus according to one or more embodiments;
FIG. 6 is a schematic view showing a proactive operation for inputting a text in a display apparatus according to one or more embodiments;
FIG. 7 is a schematic view showing a text input in a display apparatus according to one or more embodiments;
FIGs. 8 and 9 are schematic views showing a perspective display corresponding to a user's second motion input in a display apparatus according to one or more embodiments; and
FIG. 10 is a flowchart showing a control method of a display apparatus according to one or more embodiments.

Reference will now be made in detail to one or more embodiments, illustrated in the accompanying drawings, wherein like reference numerals refer to like elements throughout. In this regard, embodiments of the present invention may be embodied in many different forms and should not be construed as being limited to embodiments set forth herein, as various changes and modifications of the systems, apparatuses and/or methods described herein will be understood to be included in the invention by those of ordinary skill in the art after embodiments discussed herein are understood. Accordingly, embodiments are merely described below, by referring to the figures, to explain aspects of the present invention.

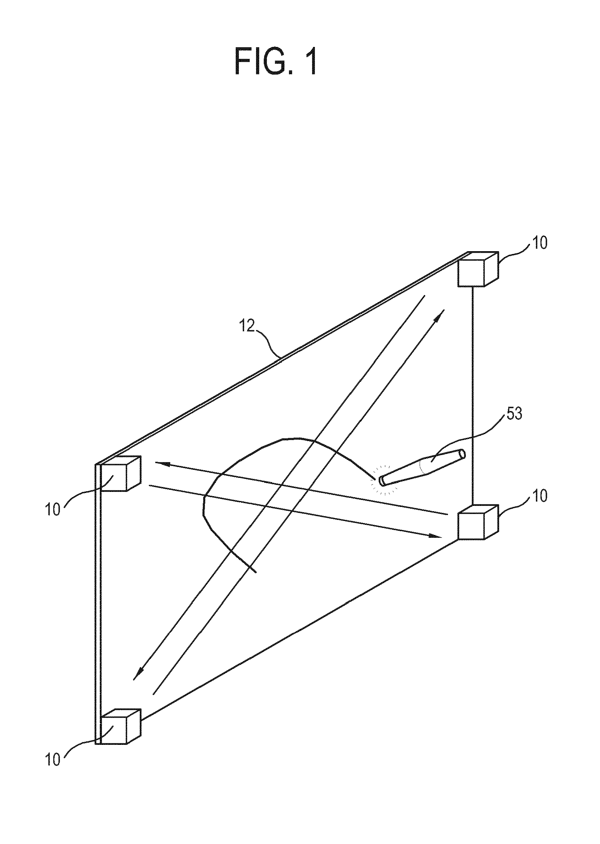

FIG. 1 is a schematic view showing a display apparatus according to one or more embodiments which uses an optical imaging method to detect touch input.

As shown in FIG. 1, the display apparatus based on the optical imaging method may include two or four cameras 10 provided in corners of a screen 12 and diagonally facing with each other. Such a camera 10 may sense that light is blocked by, for example, a pen, a finger or similar obstacle 53, so that touch input may be detected based on data about the unreached light.

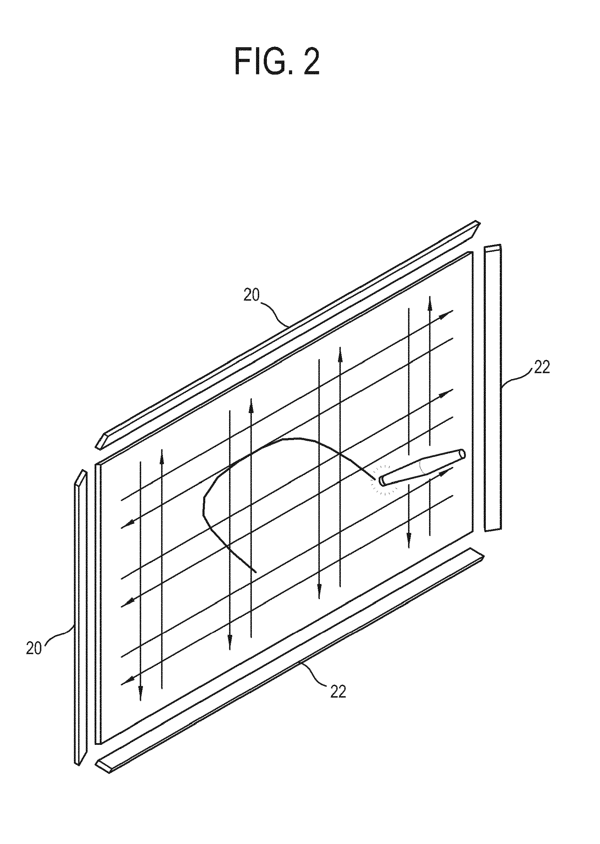

FIG. 2 is a schematic view showing a display apparatus according to one or more embodiments which uses an optical imaging method to detect touch input.

As shown in FIG. 2, the display apparatus based on the optical imaging method may include an emitting plate 20 and a reflecting plate 22 longitudinally provided along edges of a screen and facing with each other. For example, the emitting plate 20 may emit infrared rays, and thus touch input may be detected in accordance with whether the infrared rays are reflected from the reflecting plate 22.

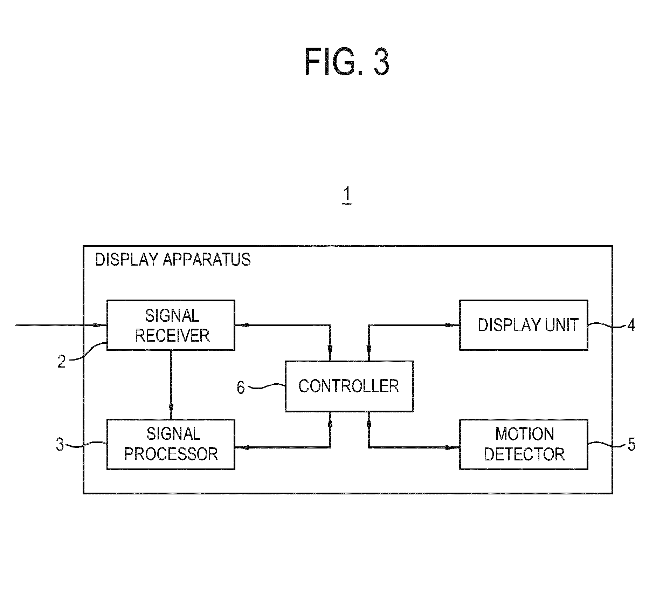

FIG. 3 is a block diagram of a display apparatus according to one or more embodiments.

As shown in FIG. 3, the display apparatus 1 according to one or more embodiments may include a signal receiver 2 which may receive a video signal; a signal processor 3 which may process the video signal; a display unit 4 which may display an image based on the video signal; a motion detector 5 which may detect a user's motion input with regard to the display unit 4; and a controller 6 which control a writing operation to be implemented on the display unit 4 with regard to a user's first motion input forming a predetermined trajectory on a screen of the display unit 4 and may control a preset function to be implemented corresponding to the writing operation with regard to a user's second motion input that gets closer to or farther from the screen of the display unit 4.

The signal receiver 2 may receive a video signal from the outside through a connector (not shown), or a video signal from an internal storage unit (not shown). The signal receiver 2 may send the received video signal to the signal processor 3.

The signal processor 3 may process the video signal received by the signal receiver 2 to be displayed on the display unit 4, and may send it to the display unit 4.

The display unit 4 may display an image based on the video signal processed by the signal processor 3.

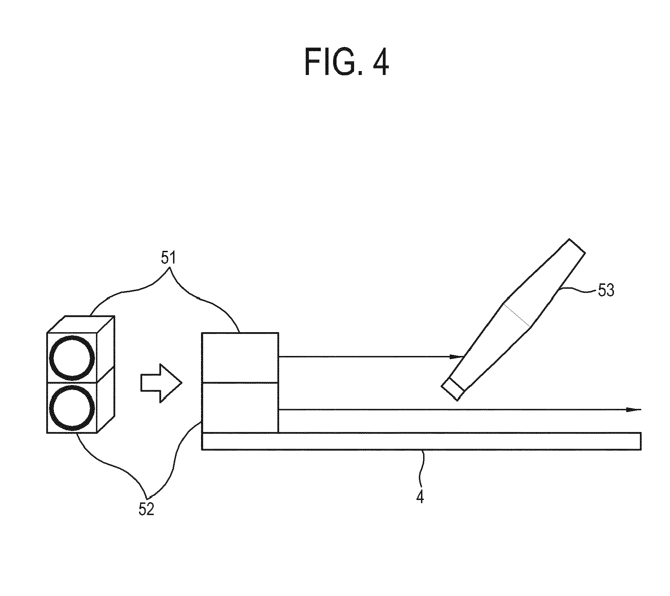

The motion detector 5 may include a plurality of sensors to detect a user's motion input with regard to the screen of the display unit 4. In one or more embodiments, as shown in Fig. 4, the first sensor 51 and the second sensor 52 will be described as an example. For example, the first sensor 51 and the second sensor 52 may be implemented by a camera. Meanwhile, a pen 53 will be described as an obstacle to be sensed by the first sensor 51 and the second sensor 52, but is not limited thereto. Alternatively, the obstacle may include, for example, a finger, a writing instrument, a stick, and anything that can be detected by the camera.

In one or more embodiments, as shown in Fig. 4, the first sensor 51 and the second sensor 52 may have a structure where they are stacked in a direction perpendicular to the screen of the display unit 4. For example, the second sensor 52 may be mounted near to the screen of the display unit 4, and the first sensor 51 may be stacked on the second sensor 52. Thus, the first sensor 51 and the second sensor 52 may be stacked with a gap narrower than a predetermined value. For example, the first sensor 51 and the second sensor 52 may be stacked leaving a gap less than 1cm.

The user's motion input detected by the first sensor 51 and the second sensor 52 may be divided into the user's first motion input forming a predetermined trajectory on the screen of the display unit 4 and the user's second motion input that gets closer to or farther from the screen of the display unit 4.

The user's first motion input may be detected by only one of the first sensor 51 and the second sensor 52, and the user's second motion input may be detected by each of the first sensor 51 and the second sensor 52.

The user's second motion input may be determined based on difference in detection time between the first sensor 51 and the second sensor 52. In accordance with difference in detection time, the user's second motion input may be reflected as pressure in an image displayed on the display unit 4. Also, in accordance with difference in detection time, the user's second motion input may be reflected as speed in an image displayed on the display unit 4.

Meanwhile, the user's second motion input may be determined based on detection order of the first sensor 51 and the second sensor 52. In accordance with the detection order, the user's second motion input may be reflected as perspective or distance in an image displayed on the display unit 4.

In consideration of both difference in detection time and difference in detection order, the user's second motion input may be reflected as a corresponding intuitive input operation in an image displayed on the display unit 4

FIG. 4 is a schematic view showing an input detecting operation of a first sensor in a display apparatus according to one or more embodiments.

If the first sensor 51 positioned farther from the screen of the display unit 4 first senses the pen 53, a proactive operation previously set corresponding to a current mode may be implemented. For example, the current mode may include, for example, a board writing mode, a text input mode, a selection mode, etc. In the case of the board writing mode, the controller 6 may control the display unit 4 to display the writing instrument such as a chalk or a fountain pen when the first sensor 51 senses the pen 53. In the case of the text input mode, the controller 6 may control the display unit 4 to display an input device such as a keyboard or a keypad when the first sensor 51 senses the pen 53. In the case of the selection mode, the controller 6 may control the display unit 4 to display a mouse pointer or the like input display device when the first sensor 51 senses the pen 53.

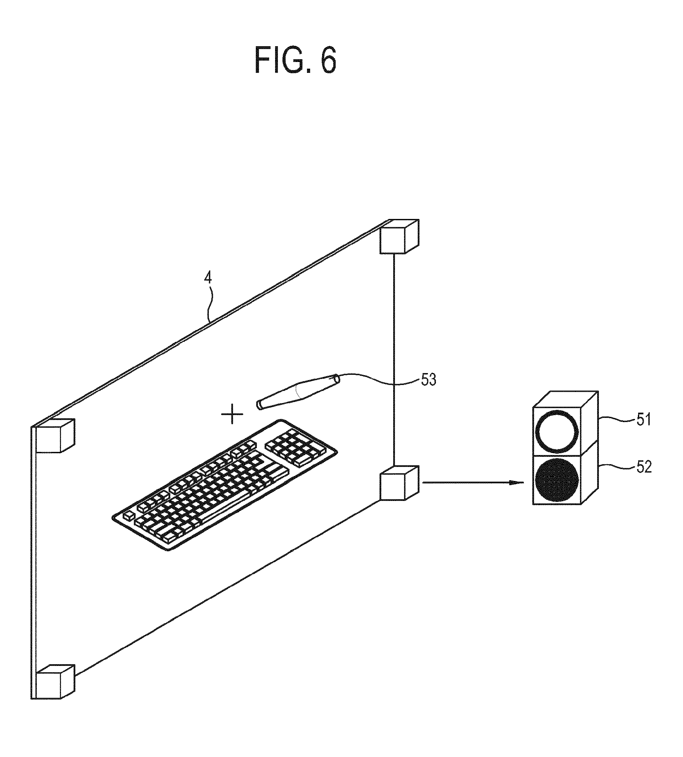

As an example of the proactive operation previously set corresponding to the current mode, the proactive operation for the foregoing text input is illustrated in FIG. 6.

Thus, until the second sensor 52 senses the pen 53 after performing the operation corresponding to the current mode, that is, after displaying the writing instrument, displaying the input device or displaying the input display device, if the first sensor 51 senses movement of the pen 53, the controller 6 may control the display unit 4 to display the wiring instrument, the input device or the input display device being moved corresponding to the foregoing movement of the pen 53.

Then, if the pen 53 moves in a direction closer to the screen of the display unit 4 until both the first sensor 51 and the second sensor 52 sense the pen 53, a function corresponding to the current mode may be performed.

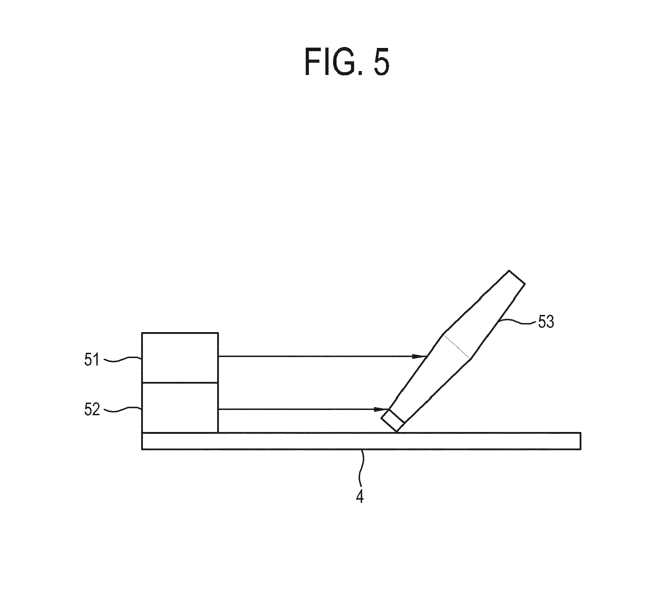

FIG. 5 is a schematic view showing an input detecting operation of a second sensor in the display apparatus according to one or more embodiments.

For example, in the case of the board writing mode, the controller 6 may implement the writing operation in accordance with the moving trajectory of the pen 53 on the display unit 4 when the second sensor 52 senses the pen 53. In the case of the input mode, the controller 6 may control the display unit 4 to receive a selection input of a key on the keyboard, the keypad or the like input device when the second sensor 52 senses the pen 53. In the case of the selection mode, the controller 6 may control the display unit 4 to perform the same operation as a click of a mouse pointer put on a displayed image when the second sensor 52 senses the pen 53.

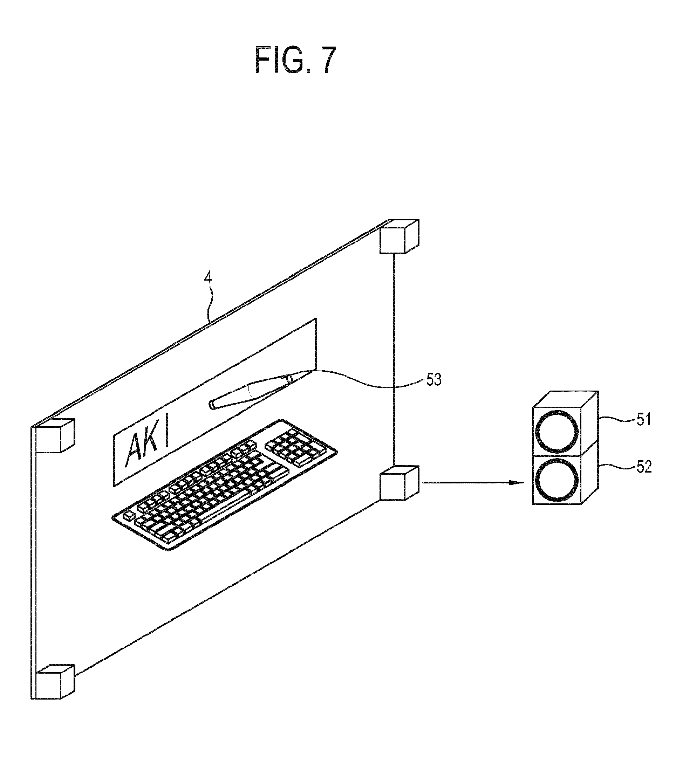

As an example of the functions corresponding to the current mode, operations for the foregoing text input will be are illustrated in FIG. 7.

Thus, the plurality of sensors, that is, the first sensor 51 and the second sensor 52 are provided, so that two operations, i.e., a proactive operation previously set corresponding to the current mode and an operation corresponding to the current mode may be achieved by one motion of moving the pen 53 in a direction closer to or farther from the display unit 4. That is, two input operations corresponding to two functions may be performed by one motion. In other words, two or more operations may be achieved by one motion.

The foregoing embodiments are nothing but examples. Alternatively, the controller 6 may be set up to control the display unit 4 to represent the speed or pressure in the current mode based on difference in detection time of the first sensor 51 and the second sensor 52. For example, if the difference in detection time between the first sensor 51 and the second sensor 52 is relatively short, it may be represented as if the input speed is quick or as if the input is heavily pressed. On the other hand, if the difference in detection time between the first sensor 51 and the second sensor 52 is relatively long, it may be represented as if the input speed is slow or as if the input is lightly pressed. Also, based on the difference in detection time between the first sensor 51 and the second sensor 52, the thickness of the writing instrument such as a paint brush may be adjusted. For example, if the difference in detection time between the first sensor 51 and the second sensor 52 is relatively short, it may be represented as if the thickness of the writing instrument such as a paint brush may be adjusted to be thin. On the other hand, if the difference in detection time between the first sensor 51 and the second sensor 52 is relatively long, it may be represented as if the thickness of the writing instrument such as a paint brush may be adjusted to be thick.

Meanwhile, the controller 6 may be set up to control the display unit 4 to represent the distance or the perspective in accordance with the detection order of the first sensor 51 and the second sensor 52.

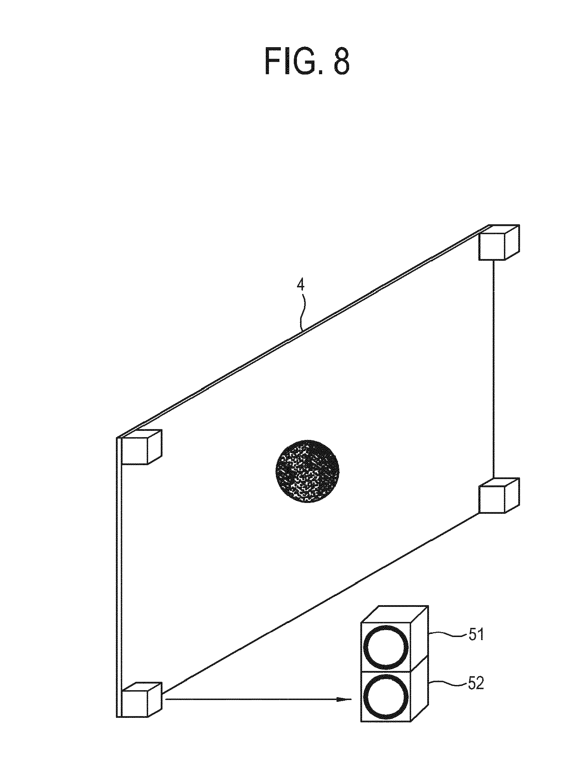

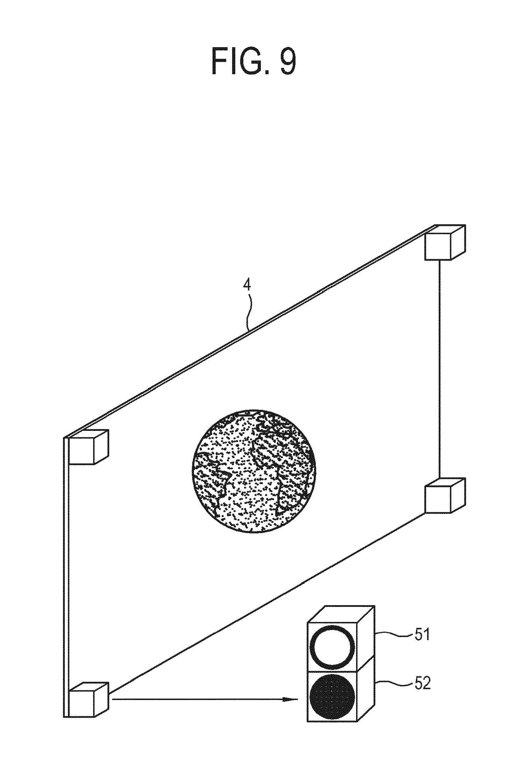

FIGs. 8 and 9 are schematic views showing a perspective display corresponding to a user's second motion input in the display apparatus according to one or more exemplary embodiments.

While the display apparatus 4 displays a predetermined image under the current mode, if the second sensor 52 first detects no input and then the first sensor 51 may detect no input. In the state that both the first sensor 51 and the second sensor 52 sense the input, for example, if the detection is changed in order from the second sensor 52 to the first sensor 51 as a user touches the screen of the display unit 4 with his/her finger (not shown) and then lifts his/her finger, the image may be enlarged as shown in FIGs. 8 and 9 in accordance with the detection order between the first sensor 51 and the second sensor 52.

Meanwhile, a user's intuitive input may be possible by taking both the difference in detection time and the detection order between the first sensor 51 and the second sensor 52 into account. For example, if the difference in detection time is short and the detection order is that the first sensor 51 is first and the second sensor 52 is second, the controller 6 may control the display unit 4 so that the image can quickly become smaller. On the other hand, if the difference in detection time is long and the detection order is that the second sensor 52 is first and the first sensor 51is second, the controller 6 may control the display unit 4 so that the image can slowly become larger.

Conventionally, in order to increase or decrease the size of the image displayed on the display unit, two points on the screen of the display unit are touched, and then the image becomes larger if the two touched points get farther each other or becomes smaller if the two touched points get closer each other. Because only the inputs corresponding to the maximum two points may be sensed on a two-dimensional plane, i.e., the screen of the display unit, only one user can do the foregoing operations for increasing/decreasing the size of image by only one user. In other words, it is possible to issue only one command between increasing the size and decreasing the size.

One or more embodiments may have the conventional problem that only the inputs corresponding to the maximum two points may be allowed due to a structural limit that the screen of the display unit 4 is a two-dimensional plane. However, in one or more embodiments an input corresponding to only one point may be enough to increase or decrease the size of an image displayed on the display unit 4 in accordance with the detection order between two sensors 51 and 52. In other words, two points may be respectively used by two users so that respective images corresponding to the points can become larger or smaller. That is, two commands may be issued through two points.

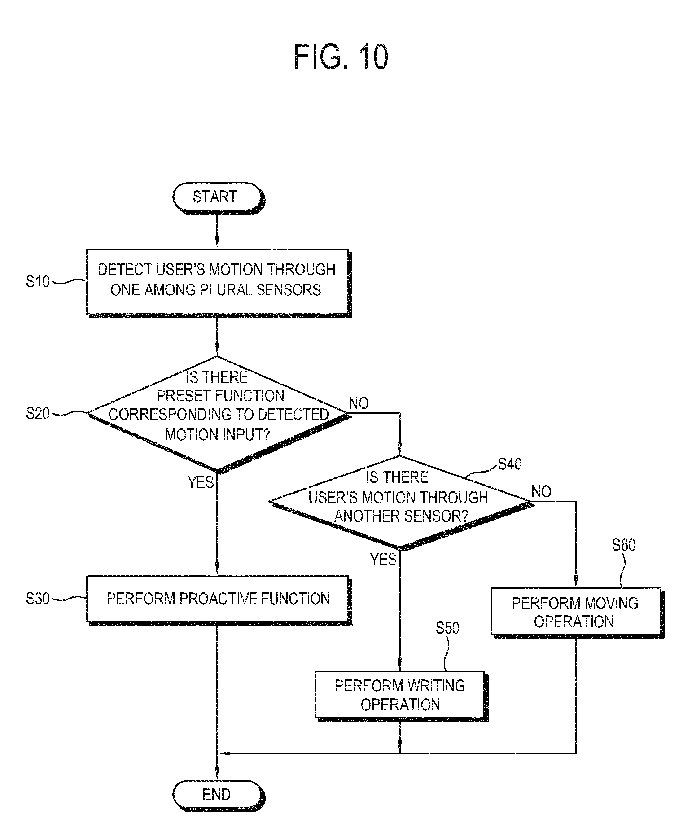

FIG. 10 is a flowchart showing a control method of the display apparatus according to one or more embodiments.

First, a user's motion input may be detected by one among the plurality of sensors (S10).

Then, it may be determined if there is a preset function corresponding to the detected motion input based on the current mode (S20).

If there is a preset function corresponding to the detected motion input based on the current mode, this function may be implemented (S30). For example, a proactive operation preset corresponding to the current mode may be performed.

On the other hand, if there is no function preset corresponding to the detected motion input based on the current mode, it may be determined that another sensor senses a user's motion input (S20).

If another sensor detects a user's motion input, the writing operation may be performed (S50).

If another sensor detects no user's motion input, the moving operation may be performed (S60).

As described above, the display apparatus and the control method thereof according to an exemplary embodiment may enable a proactive operation with response to a touch input.

Also, it may be possible to represent pressure or perspective in response to a touch input.

Also, two or more operations may be achieved by one simple motion.

Also, touch inputs of two users may be possible at a time.

In one or more embodiments, any apparatus, system, element, or interpretable unit descriptions herein include one or more hardware devices or hardware processing elements. For example, in one or more embodiments, any described apparatus, system, element, retriever, pre or post-processing elements, tracker, detector, encoder, decoder, etc., may further include one or more memories and/or processing elements, and any hardware input/output transmission devices, or represent operating portions/aspects of one or more respective processing elements or devices. Further, the term apparatus should be considered synonymous with elements of a physical system, not limited to a single device or enclosure or all described elements embodied in single respective enclosures in all embodiments, but rather, depending on embodiment, is open to being embodied together or separately in differing enclosures and/or locations through differing hardware elements.

In addition to the above described embodiments, embodiments can also be implemented through computer readable code/instructions in/on a non-transitory medium, e.g., a computer readable medium, to control at least one processing device, such as a processor or computer, to implement any above described embodiment. The medium can correspond to any defined, measurable, and tangible structure permitting the storing and/or transmission of the computer readable code.

The media may also include, e.g., in combination with the computer readable code, data files, data structures, and the like. One or more embodiments of computer-readable media include: magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Computer readable code may include both machine code, such as produced by a compiler, and files containing higher level code that may be executed by the computer using an interpreter, for example. The media may also be any defined, measurable, and tangible distributed network, so that the computer readable code is stored and executed in a distributed fashion. Still further, as only an example, the processing element could include a processor or a computer processor, and processing elements may be distributed and/or included in a single device.

The computer-readable media may also be embodied in at least one application specific integrated circuit (ASIC) or Field Programmable Gate Array (FPGA), as only examples, which execute (e.g., processes like a processor) program instructions.

While aspects of the present invention has been particularly shown and described with reference to differing embodiments thereof, it should be understood that these embodiments should be considered in a descriptive sense only and not for purposes of limitation. Descriptions of features or aspects within each embodiment should typically be considered as available for other similar features or aspects in the remaining embodiments. Suitable results may equally be achieved if the described techniques are performed in a different order and/or if components in a described system, architecture, device, or circuit are combined in a different manner and/or replaced or supplemented by other components or their equivalents.

Thus, although a few embodiments have been shown and described, with additional embodiments being equally available, it would be appreciated by those skilled in the art that changes may be made in these embodiments without departing from the principles of the invention, the scope of which is defined in the claims.

## Claims

1. A display apparatus comprising:
a signal receiver which receives a video signal;
a signal processor which processes the video signal;
a display unit which displays an image based on the video signal;
a motion detector which detects a user's first motion input and a user's second motion input with regard to the display unit; and
a controller which controls a writing operation on the display unit with regard to the user's first motion input forming a predetermined trajectory on a screen of the display unit and controls a preset function corresponding to the writing operation with regard to the user's second motion input that gets closer to or farther from the screen of the display unit.

2. The display apparatus according to claim 1, wherein the motion detector comprises a first sensor and a second sensor.

3. The display apparatus according to claim 2, wherein the first sensor and the second sensor are stacked in a direction perpendicular to the screen of the display unit.

4. The display apparatus according to claim 2 or 3, wherein the user's second motion input is determined based on a difference between a detection time of the first sensor and a detection time of the second sensor.

5. The display apparatus according to claim 4, wherein the user's second motion input is reflected as a pressure or a speed in the image displayed on the display unit.

6. The display apparatus according to any one of claims 2 to 5, wherein the user's second motion input is determined based on detection order between the first sensor and the second sensor.

7. The display apparatus according to claim 6, wherein the user's second motion input is reflected as a perspective or a distance in the image displayed on the display unit.

8. The display apparatus according to any one of claims 2 to 7, wherein a gap between a detection of the first sensor and a detection of the second sensor is less than a predetermined value.

9. The display apparatus according to any one of the preceding claims, wherein the user's second motion input corresponds to two input operations.

10. The display apparatus according to claim 9, wherein the user's second motion input comprises a simultaneous motion input of another user.

11. A method of controlling a display apparatus, the method comprising:
detecting a user's first motion input and a user's second motion input with regard to a display unit of the display apparatus; and
controlling a writing operation on the display unit with regard to the user's first motion input forming a predetermined trajectory on a screen of the display unit and controls a preset function corresponding to the writing operation with regard to the user's second motion input that gets closer to or farther from the screen of the display unit.

12. The method according to claim 11, wherein the detecting a user's motion input with regard to the display unit comprises using a first sensor and a second sensor to detect the user's motion input.

13. The method according to claim 12, wherein the first sensor and the second sensor are stacked in a direction perpendicular to the screen of the display unit.

14. The method according to claim 12 or 13, wherein the user's second motion input is determined based on a difference between a detection time of the first sensor and a detection time of the second sensor.

15. The method according to claim 14, wherein the user's second motion input is reflected as a pressure or a speed in the image displayed on the display unit.
